# EUROPEAN PATENT SPECIFICATION

(11) **EP 2 366 480 B1**
(45) Date of publication and mention of the grant of the patent: **29.08.2012**
(21) Application number: 11002023.7
(22) Date of filing: 11.03.2011
(51) Int. Cl.: B23C 3/12, B23B 41/00, B23Q 3/00, B29C 37/04, B23Q 7/16, B23P 21/00, B23Q 7/04

(54) **An apparatus for machining door or window frames**
Anlage und Verfahren zur Herstellung von Rahmen für Fenster oder Türen
Installation et procédé pour la fabrication de cadres pour portes ou pour fenêtres

(30) Priority: 16.03.2010 IT MO20100069
(43) Date of publication of application: 21.09.2011
(73) Proprietor: Emmegi S.P.A., 41010 Soliera (MO) (IT)
(72) Inventor: Arrondini, Cesare, 61122 Pesaro (Pesaro-Urbino) (IT); Masetti, Goffredo, 61122 Pesaro (Pesaro-Urbino) (IT)
(74) Representative: Gotra, Stefano

(56) References cited:
- DE-A1- 3 920 462
- DE-A1- 19 952 492
- IT-B- 1 217 614
- US-A- 6 006 408

## Description

The invention relates to an apparatus according to the preamble of claim 1 for performing mechanical work operations on door or window frames, particularly for performing milling or drilling operations on frames made of a polymer material such as polyvinyl chloride (PVC). An example of such an apparatus is disclosed in US 6006 408.

PVC frames are generally provided with holes, slots or milling cuts which serve for fixing to the frames handles, hinges or other components which are required in order that the frame may be used for obtaining a door or window. The holes, slots or more in general the milling cuts are traditionally made on single PVC section bars, which are then cut to a desired length and thereafter assembled to obtain the frame.

The frames obtained as described above have the drawback of poor precision, as errors can occur when the section bars are cut and/or welded to one another. Errors of this type, combined with further imprecisions which can occur during mechanical operations of drilling or milling, frequently lead to a frame in which the holes or slots are in a position which does not correspond to the desired position.

IT 1217614 discloses a machine for milling and drilling, which can be used for working hollow section bars for doors or windows.

The machine disclosed in IT 1217614 is only suitable for processing single section bars, intended to be subsequently assembled. However, the machine disclosed in IT 1217614 is not suitable for working door or window frames.

DE 3920462 discloses a machine for working door or window frames, the machine comprising conveyor means for conveying a frame along an advancement direction towards a working zone. A working unit is located in the working zone for working a section bar of the frame, the working unit being movable along a movement direction perpendicular to the advancement direction.

A drawback of the machine disclosed in DE 3920462 is that the working unit, which is movable perpendicularly to the advancement direction, obstructs the frames moving along the advancement direction and conveyed by the conveyor means. After a frame has been worked by the working unit disclosed in DE 3920462, the working unit must be completely disengaged from the frame in order that the frame may be moved away from the working zone, by displacing the working unit in the movement direction until an inoperative position at a side of the already worked frame is reached. In the inoperative position, a considerable space is required for receiving the working unit and the corresponding driving devices. This increases the machine dimensions.

Furthermore, additional times are required for displacing the working unit in the inoperative position, which decreases the machine productivity.

US 6006408 discloses a vinyl weld seam cleaner having a fixed support head and a movable support head.

An object of the invention is to improve quality of door or window frames, in particular PVC frames.

Another object is to provide an apparatus which enables increasing the precision of the work operations performed on door or window frames.

A further object is to provide an apparatus which enables obtaining door or window frames having holes, slots and the like that are in a position substantially corresponding to the desired position.

Another object is to provide an apparatus for working door or window frames having dimensions which are not excessive.

Still a further object is to provide an apparatus for working door or window frames having a good productivity.

According to the invention, there is provided an apparatus for performing a mechanical work operation on a door or window frame, having the features set out in claim 1. With respect to the apparatus of US 6 006 408 the support devices and transverse blocking devices are fewer and as they are integrated with the working unit they move together with the working unit.

Owing to the invention, the mechanical work operations can be performed on the already assembled frame, which allows the section bars forming the frame to be worked in the exact position where the work operation is required. Thus, it is possible to substantially eliminate errors in the position of holes, slots and the like which occurred in the prior art machines if the already worked section bars were imprecisely cut or assembled.

Furthermore, the transverse blocking device and the support device are movable with the working unit, which allows the transverse blocking device and the support device to engage only with a portion of the first section bar having a limited length. Immediately upstream and/or downstream of said portion, the faces of the first section bar remain therefore free. Consequently, the working unit can perform the required work operations on any face of the first section bar. In particular, the working unit is capable of performing work operations on the lower face of the first section bar, apart from the regions of the lower face which rest on the support device.

The apparatus according to the invention comprises conveyor means for conveying the frame along an advancement direction towards a working zone in which the working unit is arranged. The advancement direction along which the frame is conveyed is parallel to the movement direction along which the working unit is movable.

In this way, it is possible to obtain an apparatus in which the working unit does not obstruct movement of the frames along the advancement direction. Therefore, after a frame has already been worked, there is no need to displace the working unit transversely to the advancement direction for disengaging the working unit from the frame.

The apparatus works therefore in a simplified manner and the frame can be moved as soon as the working unit has finished the work operation, thereby increasing the apparatus productivity.

Furthermore, the overall dimensions can be reduced with respect to the machine disclosed in DE 3920462, since there is no need to provide, at a side of the working zone, an additional space in which the working unit can be received when it is not operative.

In an embodiment, a further working unit is provided in the working zone, the further working unit being movable parallelly to the advancement direction for working a third section bar of the frame.

Since both the working unit and the further working unit are movable parallelly to the advancement direction for working the respective section bars, both the working units can be positioned in the same working zone, i.e. in the same working station, without obstructing movement of the frames.

This enables obtaining an apparatus which has high productivity and particularly compact dimensions.

The invention can be better understood and carried out with reference to the accompanying figures of the drawings, which illustrate a non-limiting embodiment thereof, in which:
Figure 1 is a perspective view of an apparatus for performing mechanical work operations on door or window frames;
Figure 2 is an enlarged and interrupted perspective view, showing a working unit of the apparatus of Figure 1;
Figure 3 is an enlarged and interrupted perspective view, showing gripping means of the apparatus of Figure 1;
Figure 4 is a view taken along direction D of Figure 2, showing a frame which is ready to be worked, in which a part of the frame has been removed for the sake of clarity;
Figure 5 is a schematic plan view showing a frame during working;
Figure 6 is a schematic plan view, showing a plant for manufacturing frames for doors or windows.

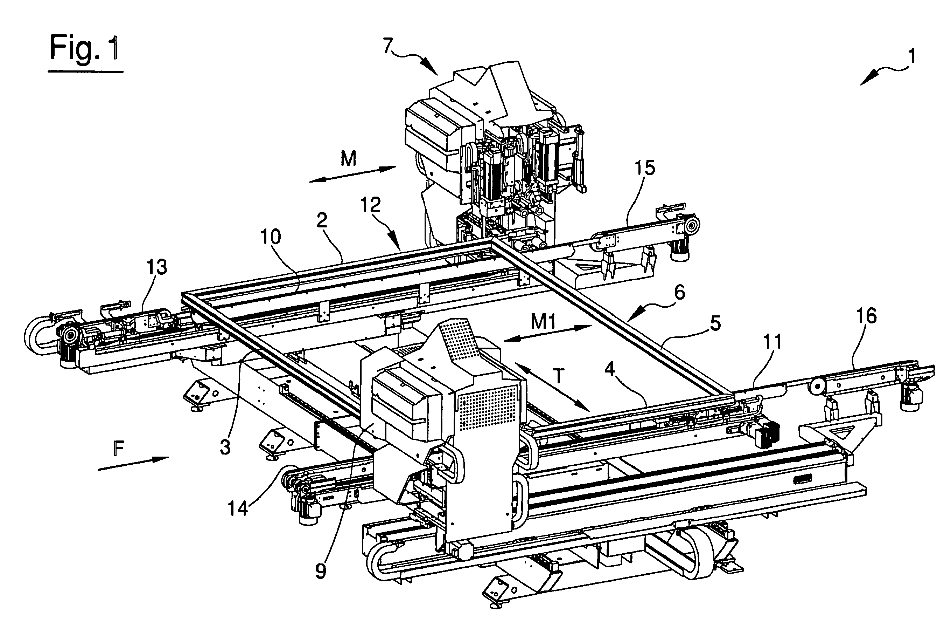

Figure 1 shows an apparatus 1 for performing mechanical work operations on a frame 6 of a door or window, the frame being particularly made of a polymer material, such as polyvinyl chloride (PVC). The frames 6 that are processed by the apparatus 1 comprise a plurality of section bars joined to one another by welding, gluing or other joining techniques. In the illustrated example, the frames 6 have a quadrangular shape and comprise a first section bar 2, a second section bar 3, a third section bar 4 and a fourth section bar 5. The first section bar 2 and the third section bar 4 are parallel to one another. The second section bar 3 and the fourth section bar 5 are also parallel to one another and are arranged transversely, for example perpendicularly, to the first section bar 2 and the third section bar 4.

The apparatus 1 can work also frames having a shape different from the frame 6 which was disclosed above. Each section bar forming the frame 6 is delimited by a plurality of faces, for example an upper face, a lower face and two lateral faces. The faces of the section bar may have a flat shape or geometries different from the flat geometry.

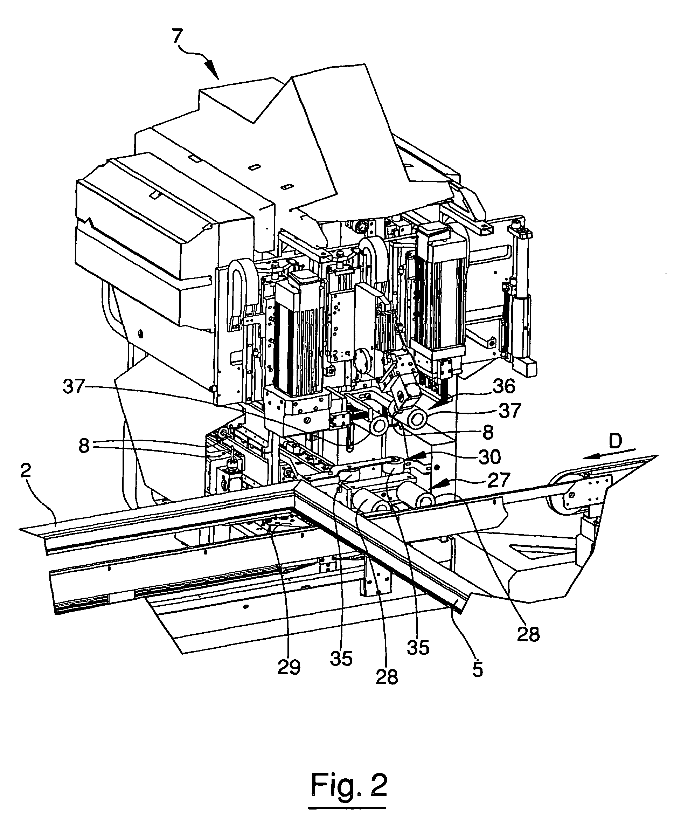

The apparatus 1 comprises at least one working unit 7 arranged for performing mechanical work operations on a section bar forming the frame 6, for example on the first section bar 2. One or more tools 8, shown in Figure 2, can be mounted on the working unit 7, said tools being suitable for performing the desired mechanical work operations, for example drilling or milling operations, on the frame 6.

A driving system is associated to the working unit 7, the driving system being arranged for moving the working unit 7 forwards and backwards in a movement direction M, which can be substantially parallel to the first section bar 2. The driving system enables the working unit 7 to be displaced along the first section bar 2 such as to perform the mechanical work operations in the desired position.

In the illustrated embodiment, the apparatus 1 comprises a further working unit 9 arranged for performing work operations on a section bar opposite the first section bar 2, i.e. on the third section bar 4. The further working unit 9 is also movable in a respective movement direction M1, which can be parallel to the movement direction M. In this way, the further working unit 9 can be displaced in order to perform the mechanical work operations in the desired position on the third section bar 4.

The further working unit 9 has an entirely similar structure to the working unit 7. All the following, disclosed with reference to the working unit 7, should be considered to be applicable also to the further working unit 9, unless otherwise indicated.

In a simplified embodiment, the apparatus 1 can comprise a single working unit.

The apparatus 1 comprises resting means for restingly receiving the frame 6 during working. The resting means define a working zone 12 in which the frame 6 can be subjected to the desired mechanical work operations. The resting means are suitable for supporting two section bars that are opposite to one another and which do not interact with the working unit 7 and with the further working unit 9, if any, i.e. the second section bar 3 and the fourth section bar 5. In this way, the section bars which have to be worked, i.e. the first section bar 2 and possibly the third section bar 4, do not engage with the resting means and all their faces remain free. In the illustrated example, the resting means comprise a first elongated element 10 and a second elongated element 11, for example parallel to one another. The second section bar 3 and the fourth section bar 5 rest on the first elongated element 10 and on the second elongated element 11. The first elongated element 10 and the second elongated element 11 can be shaped as two longitudinal bars.

The resting means define a resting plane arranged at a predefined height.

Upstream of the resting means there are provided inlet conveyor means suitable for transporting the frame 6 to be worked towards the working zone 12, in an advancement direction F. The advancement direction F is parallel to the movement direction M and to the further movement direction M1.

The inlet conveyor means can comprise a first inlet conveyor 13 and a second inlet conveyor 14, for example of a belt type. The first inlet conveyor 13 can be so positioned as to interact with zones of the second section bar 3 and of the fourth section bar 5 arranged near the first section bar 2. The second inlet conveyor 14, on the other hand, can be so positioned as to interact with zones of the second section bar 3 and of the fourth section bar 5 arranged near the third section bar 4.

The apparatus 1 further comprises discharge conveyor means arranged downstream of the resting means for carrying the already worked frame 6 away from the working zone 12, by moving the frame 6 in the advancement direction F. The discharge conveyor means can comprise a first discharge conveyor 15 and a second discharge conveyor 16, for example of a belt type. The first discharge conveyor 15 can be so positioned as to interact with zones of the second section bar 3 and of the fourth section bar 5 arranged near the first section bar 2, whereas the second discharge conveyor 16 can be so positioned as to interact with zones of the second section bar 3 and of the fourth section bar 5 arranged near the third section bar 4.

The first inlet conveyor 13, the first elongated element 10 and the first discharge conveyor 15 can be substantially aligned along the advancement direction F, like the second inlet conveyor 14, the second elongated element 11 and the second discharge conveyor 16.

The second inlet conveyor 14, the second elongated element 11 and the second discharge conveyor 16, together with the further working unit 9, if any, define a group that can be moved by a movement device in a transverse direction T, arranged transversely of the advancement direction F. Thus, it is possible to vary the distance between the first elongated element 10 and the second elongated element 11, as well as the distance between the working unit 7 and the further working unit 9, if any. This enables frames of different sizes to be worked, and in particular frames having different distances between the first section bar 2 and the third section bar 4.

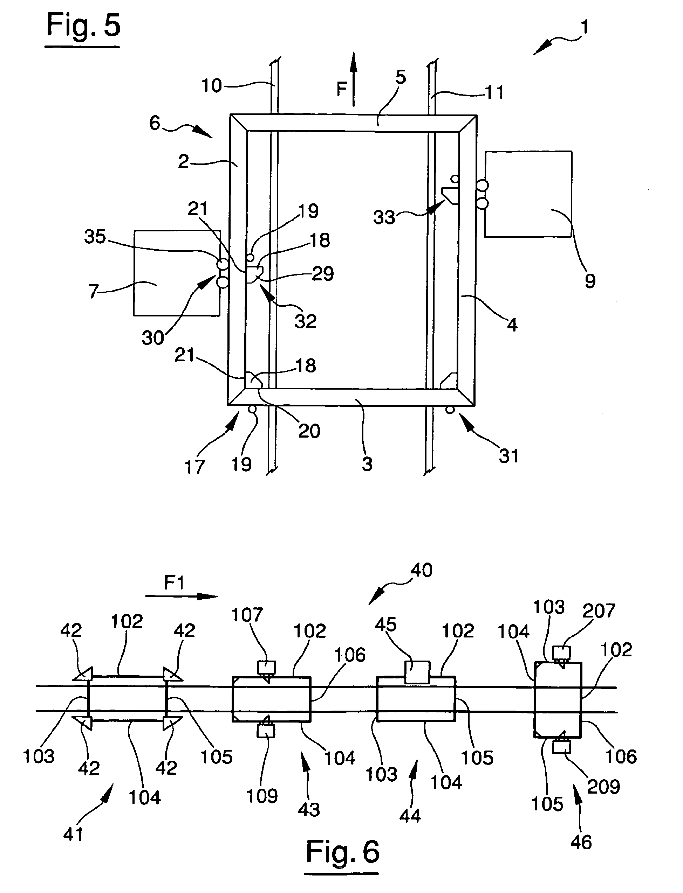

The apparatus 1 further comprises gripping means suitable for engaging with a section bar which is adjacent to the section bar that is being worked, for example with the second section bar 3, such as to keep the frame 6 stationary during the work operation. As shown in Figure 5, the gripping means can comprise a first gripping device 17, arranged at a side of the apparatus 1 near the working unit 7. The gripping means can further comprise a second gripping device 31, arranged at a side of the apparatus 1 close to the further working unit 9. The second gripping device 31 is arranged in a symmetrical position with respect to the first gripping device 17, with reference to a longitudinal axis of the apparatus 1, i.e. an axis which is parallel to the advancement direction F.

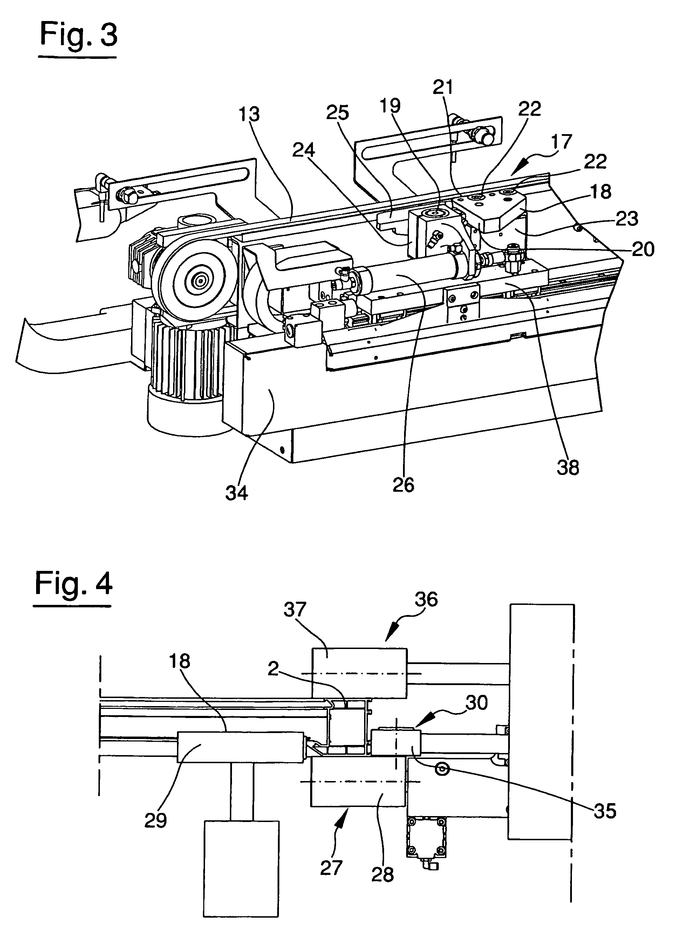

As shown in Figure 3, the first gripping device 17 comprises a first jaw element 18 and a second jaw element 19, suitable for cooperating with one another to grip the second section bar 3. The first jaw element 18, shaped for example as an approximately triangular plate, may have a first operating surface 20 arranged for engaging with a face of the second section bar 3, and a second operating surface 21, arranged for engaging with a face of the first section bar 2. The first operating surface 20 can be shaped as a flat vertical surface. The second operating surface 21 can be provided with one or more rolling elements 22, for example rollers having a vertical axis, so as to allow the first section bar 2 to easily slide relative to the second operating surface 21. The first operating surface 20 and the second operating surface 21 can be perpendicular to one another. The first operating surface 20 and the second operating surface 21 are suitable for engaging with an internal corner zone of the frame 6, said internal corner zone being in particular defined as a zone in which the first section bar 2 is joined to the second section bar 3.

The first jaw element 18 can be provided with a driving device 23 for moving the first jaw element 18 in a vertical direction, such that the first jaw element 18 can engage with, or disengage from, the frame 6. The driving device 23 can be of a pneumatic type and can comprise, for example, a pneumatic actuator having a stem to an upper end of which the first jaw element 18 is fixed.

The second jaw element 19 can be defined by a stem of an actuator device 24, for example a pneumatic actuator. The stem is movable between a retracted position, in which the stem is housed in a cylinder of the actuator device 24, and an extended position, in which the stem exits from the cylinder. In the extended position, a lateral surface of the stem can engage with a face of the second section bar 3, such that the stem acts as a jaw. In the retracted position, the stem does not interact with the frame 6.

A resting element 25 can be provided for supporting the portion of section bar clamped between the firs jaw element 18 and the second jaw element 19.

The first gripping device 17 can further comprise movement means 26 for moving the first jaw element 18 and the second jaw element 19 with respect to one another, such as move towards one another, or away from one another, the first jaw element 18 and the second jaw element 19. In this way the first jaw element 18 and the second jaw element 19 can alternatively block the second section bar 3 or leave it free.

A displacement device allows the first gripping device 17 to be moved forwards and backwards along the advancement direction F. The displacement device acts on a carriage 38 on which the first jaw element 18 and the second jaw element 19 are mounted and can comprise, for example, a belt housed in a case 34.

The first gripping device 17 has therefore one degree of freedom in translation.

The second gripping device 31 has a structure which is entirely similar to the structure of the first gripping device 17.

As shown in Figure 5, the apparatus 1 can comprise a third gripping device 32, arranged at the side of the apparatus 1 near which the working unit 7 is located. A fourth gripping device 33 can be provided at a side of the apparatus 1 along which the further working unit 9 moves. The third gripping device 32 and the fourth gripping device 33 are located downstream of the first gripping device 17 and of the second gripping device 31 with respect to the advancement direction F. In particular, the third gripping device 32 can be aligned with the first gripping device 17, whereas the fourth gripping device 33 can be aligned with the second gripping device 31.

The third gripping device 32 and the fourth gripping device 33 have a structure which is entirely similar to the structure of the first gripping device 17.

The position of the second gripping device 32 and of the fourth gripping device 33 in the transverse direction T is adjustable so that it is possible to work frames 6 having different widths, i.e. frames having different distances between the first section bar 2 and the third section bar 4.

The apparatus 1 further comprises a support device 27, shown in Figure 2, which is arranged for locally supporting the section bar to be worked, i.e. the first section bar 2, near the zone in which the work operation is to be performed. The support device 27 is so conformed as to engage not with the whole length of the first section bar 2, but only with a limited portion of the first section bar 2. Thus, the support device 27 allows the first section bar 2 to be supported only in the zone where a support is indeed useful, i.e. near the zone that is to be worked. In the adjacent zones, the support device 27 leaves the first section bar 2 free, which makes it possible to approach such zones in order to perform the required work operations.

The support device 27 has an upper resting surface on which the first section bar 2 rests. In the shown example, the support device 27 comprises a pair of resting rollers 28 having respective horizontal axes. The resting rollers 28 are freely rotatable about their axes and can be made of a polymer material. The resting rollers 28 can be at a distance from one another, so as to leave accessible the lower face of the first section bar 2 in a region interposed between a resting roller 28 and the other.

The support device 27 is movable together with the working unit 7. In the illustrated example, the support device 27 is integrated with the working unit 7, since the resting rollers 28 are supported by the working unit 7. Thus, when the working unit 7 moves along the first section bar 2, also the resting rollers 28 move in the movement direction M, so as to interact with subsequent portions of the first section bar 2.

If the further working unit 9 is provided, a further support device is associated to the latter, the further support device being entirely similar to the support device 27.

The apparatus 1 further comprises a transverse blocking device which, during working, enables the portion of the first section bar 2 supported by the support device 27 to be blocked transversely to the movement direction M. The transverse blocking device comprises an abutment element 29 cooperating with pushing means 30. In particular, the pushing means 30 are suitable for pushing the first section bar 2 against the abutment element 29.

The abutment element 29 is so positioned as to interact with a lateral face of the first section bar 2 internally of the frame 6. The pushing means 30 are positioned such as to interact with a further lateral face of the first section bar 2 externally of the frame 6. In this way, the abutment element 29 and the pushing means 30 engage with opposite lateral faces of the first section bar 2 such as to prevent the first section bar 2 from moving transversely of the advancement direction F while the first section bar 2 is being worked.

The abutment element 29 can coincide with the first jaw element 18 of the third gripping device 32.

The pushing means 30 can be mounted on the working unit 7, and can comprise a pair of wheels 35 which are freely rotatable about respective vertical axes. The wheels 35 can be made of a plastic material. A presser device, for example of a pneumatic type, acts on the wheels 35 for pushing the wheels 35 towards a lateral face of the first section bar 2 arranged externally of the frame 6. The pushing means 30 are movable together with the working unit 7 along the movement direction M.

The apparatus 1 can further comprise an upper blocking device 36, arranged for engaging with the portion of the first section bar 2 which interacts with the support device 27 and with the transverse blocking device. The upper blocking device 36 prevents upwardly-directed displacement of the first section bar 2 while the first section bar 2 is being worked. The upper blocking device 36 is movable together with the working unit 7 along the movement direction M. To this end, the upper blocking device 36 can be supported by the working unit 7.

The upper blocking device 36 can comprise a pair of upper rollers 37 mounted on the working unit 7. The upper rollers 37 extend along respective horizontal axes and can be freely rotatable around said axes. The upper rollers 37 can be made of a polymer material.

The upper blocking device 36 is arranged above the support device 27. In particular, the upper rollers 37 can be approximately aligned with the resting rollers 28.

A presser organ, for example of a pneumatic type, is associated to the upper blocking device 36 so as to push the upper blocking device 36 downwards. Thus, the portion of the first section bar 2 near which the work operations are to be performed is blocked between the support device 27 and the upper blocking device 36 and cannot move in a vertical direction.

During functioning, the first inlet conveyor 13 and the second inlet conveyor 14 advance a frame 6 to be worked in the advancement direction F, until the frame 6 is brought into a loading zone in which the frame 6 can be grasped by the gripping means. Alternatively, it is also possible to manually position the frame 6 in the loading zone. In this step, the first jaw element 18 and the second jaw element 19 of the gripping devices 17, 31, 32, 33 are in a lowered position, i.e. at a lower height than the height of the frame 6.

When the frame 6 is positioned in the loading zone, the third gripping device 32 and the fourth gripping device 33, owing to their respective displacement devices, are positioned at the fourth section bar 5 of the frame 6, i.e. at the section bar which is arranged in a more advanced position with respect to the advancement direction F. The first jaw element 18 and the second jaw element 19 of the third gripping device 32 and of the fourth gripping device 33 are moved upwards and are then moved one towards the other by their respective movement means 26, so as to grasp the fourth section bar 5. In particular, the first jaw elements 18 of the gripping devices 32, 33 are positioned internally of the frame 6 whereas the second jaw elements 19 of the gripping devices 32, 33 are positioned externally of the frame 6. After grasping the fourth section bar 5, the third gripping device 32 and the fourth gripping device 33 are advanced in the advancement direction F by their respective displacement devices, so as to drag the frame 6 to the working zone 12.

During this step, the jaw elements of the first gripping device 17 and of the second gripping device 31 are still arranged in a lowered position, below the frame 6, and simply follow the frame 6.

When the frame 6 has been positioned in the working zone 12, the first jaw element 18 and the second jaw element 19 of the first gripping device 17 and of the second gripping device 31, which were previously positioned at the second section bar 3 (i.e. at the section bar arranged in a more backward position with respect to the advancement direction F), are raised and moved one towards another so as to grasp the second section bar 3. Thus, the first gripping device 17 and the second gripping device 31 enable the frame 6 to be kept stationary while the frame 6 is being worked. In particular, the first gripping device 17 engages with a corner zone of the frame 6 in which the second section bar 3 is joined to the first section bar 2. The second gripping device 31 engages with a further corner zone of the frame 6 in which the second section bar 3 is joined to the third section bar 4.

The third gripping device 32 and the fourth gripping device 33 disengage from the fourth section bar 5 and are arranged in the lowered position. At this point, the third gripping device 32 and the fourth gripping device 33 can move backwards respectively along the first section bar 2 and the third section bar 4. The third gripping device 32 and the fourth gripping device 33 stop when they reach the position in which the first work operation on the corresponding section bar is to be performed. Also the working unit 7 and the further working unit 9 are arranged in that position.

In this moment, the frame 6 is supported by the first elongated element 10 and by the second elongated element 11, on which in particular the second section bar 3 and the fourth section bar 5 rest. The first section bar 2 rests on the support device 27, near the zone in which the work operation is to be performed. Similarly, the third section bar 4 rests on the further support device associated to the further working unit 9.

The sequence of operations that are carried out on the first section bar 2 in order that the working unit 7 may perform the required work operations is disclosed below with reference to Figures 4 and 5. It is intended that a similar sequence of operations are also carried out on the third section bar 4 when the latter is to be processed by the further working unit 9, if any.

The first jaw element 18 of the third gripping device 32, after being positioned at the working unit 7, is brought into the raised position by the driving device 23. The jaw elements 18, 19 of the first gripping device 17 and of the second gripping device 31 are slightly moved away one from another in order to temporarily allow the frame 6 to be moved in a direction perpendicular to the advancement direction F. The presser device can now act on the wheels 35 in order to cause them to abut against an external lateral face of the first section bar 2 and push the first section bar 2 towards the first jaw element 18 of the third support device 32. The first section bar 2 is therefore caused to abut against said jaw element, as shown in Figure 5. Thus, it is possible to precisely define the position of the frame 6 in a horizontal direction perpendicular to the advancement direction F.

The first jaw element 18 of the third support device 32 acts in this step as an abutment element 29 against which the first section bar 2 is pressed by the pushing means 30. The first section bar 2, blocked between the abutment element 29 and the pushing means 30, cannot displace horizontally in a direction transverse to the advancement direction F. The second jaw element 19 of the third gripping device 32 is not active, since its stem is arranged in the retracted position and does not interact with the first section bar 2.

When the first section bar 2 has been blocked between the pushing means 30 and the abutment element 29, the jaw elements 18, 19 of the first gripping device 17 and of the second gripping device 31 can clamp again the second section bar 2.

Due to the force exerted by the pushing means 30 on the first section bar 2, it is ensured that the first section bar 2 abuts not only against the abutment element 29, but also against the first jaw element 18 of the first gripping device 17, in particular against the respective second operating surfaces 21.

The upper blocking device 36 is at this point moved downwards until it abuts against an upper face of the first section bar 2. In particular, a lower surface of the upper rollers 37 abuts against the upper face of the first section bar 2. The first section bar 2 is now vertically blocked between the upper blocking device 36 and the support device 27. A working configuration is thus reached, in which the required mechanical work operations can be performed. This working configuration is shown in Figure 4.

It is noted that, in the working configuration, the frame 6 is precisely positioned in the apparatus 1. In particular, the frame 6 rests on the first elongated element 10 and on the second elongated element 11, which ensure that the frame 6 is located at a predefined height. The position of the frame 6 along the advancement direction F is determined by the first gripping device 17 and by the second gripping device 31. The position of the frame 6 in a horizontal direction perpendicular to the advancement direction F is determined by the pushing means 30, cooperating with the abutment element 29.

In the working configuration, the support device 27, the transverse blocking device and the upper blocking device 36 engage only with a portion of the section bar 1 having a limited length, for example of the order of some centimetres. Upstream and downstream of this portion, all the four faces of the first section bar 2, and in particular its lower face, are free. The tools 8 of the working unit 7 can therefore work any face of the first section bar 2. In particular, the tools 8 can interact with the first section bar 2 immediately upstream of the support device 27 and of the transverse blocking device, or immediately downstream of the support device 27 and of the transverse blocking device. Work operations can also be performed in the regions of the first section bar 2 interposed between the upper rollers 37, and/or the resting rollers 28, and/or the wheels 35.

If only drilling operations are to be performed on the first section bar 2, the working unit 7 can remain stationary during the work operations. Similarly, when the first section bar 2 is to be subjected to milling operations along a direction orthogonal to the movement direction M, the working unit 7 can remain stationary during the work operation, which is performed by suitably moving the tools 8. If on the other hand the section bar 2 is to be subjected to milling operations along a direction having a component which is parallel to the movement direction M, the working unit 7 moves along the first section bar 2 during the work operation. Similarly, the working unit 7 moves in the movement direction M when the working unit 7 has to be displaced from one zone to another of the first section bar 2 in order to work different zones.

When the working unit 7 moves in the movement direction M, the support device 27 and the pushing means 30 move together with the working unit 7. Also the upper blocking device 36 in this case moves together with the working unit 7. Furthermore, when the working unit 7 moves in the movement direction M, the abutment element 29 is displaced by its respective displacement device synchronously with the working unit 7. Thus, the support device 27, the transverse blocking device and the upper blocking device 36 disengage from the portion of the first section bar 2 with which they previously interact and engage with other portions of the first section bar 2.

The resting rollers 28, the upper rollers 37 and the wheels 35, which are freely rotatable around the respective axes, as well as the rolling elements 22 associated to the abutment element 29, allow the working unit 7 to move easily, in the movement direction M, along the first section bar 2.

When the mechanical work operations performed by the working unit 7 on the first section bar 2 are concluded, the upper blocking device 36 disengages from the first section bar 2. To this end, the upper rollers 37 are moved upwards. Also the transverse blocking means release the first section bar 2, which occurs by moving the pushing means 30 away from the frame 6. The first jaw element 18 of the third gripping device 32 has now finished to work as an abutment element and can be displaced in the lowered position below the frame 6.

A similar sequence of operations occurs in relation to the third section bar 4.

The first gripping device 17 and the second gripping device 31, which are still blocking the second section bar 3, are now moved in the advancement direction F, without releasing the second section bar 3. The first gripping device 17 and the second gripping device 31 thus push the frame 6, which has already been worked, away from the working zone 12, towards an unloading zone in which the frame 6 can be unloaded from the apparatus 1, for example manually or by means of the first discharge conveyor 15 and of the second discharge conveyor 16. The apparatus 1 is now ready to receive a new frame 6 to be worked.

In the embodiment which has been disclosed up to now, the pair of gripping devices arranged in a more backward position relative to the advancement direction F, i.e. the pair comprising the first gripping device 17 and the second gripping device 31, is used for keeping the frame 6 stationary during the work operations. The pair of gripping devices arranged in a more advanced position relative to the advancement direction F, i.e. the pair comprising the third gripping device 32 and the fourth gripping device 33, follows the working unit 7 and the further working unit 9, if any, during the work operations.

It is however possible also to use the pair of gripping devices which are arranged in a more advanced position relative to the advancement direction F, i.e. the pair comprising the third gripping device 32 and the fourth gripping device 33, for keeping the frame 6 blocked during the work operations. In this case, the pair of gripping devices arranged in a more backward position relative to the advancement direction F, i.e. the pair comprising the first gripping device 17 and the second gripping device 31, would follow the working unit 7 and the further working unit 9 during the work operations.

In other words, the first gripping device 17 and the third gripping device 32 are functionally interchangeable. Also the second gripping device 31 and the fourth gripping device 33 are functionally interchangeable. This is possible owing to symmetry of the gripping devices. In particular, the first gripping device 17 and the third gripping device 32 are symmetric with respect to a horizontal axis orthogonal to the advancement direction F. Also the second gripping device 31 and the fourth gripping device 33 are symmetric with respect to said axis.

Furthermore, in the embodiment which has been disclosed up to now, the third gripping device 32 and the fourth gripping device 33, i.e. the gripping devices arranged in a more advanced position relative to the advancement direction F, were used for dragging the frame 6 to be worked from the loading zone to the working zone 12. The first gripping device 17 and the second gripping device 31 were on the other hand used for pushing the already worked frame 6 from the working zone 12 towards the unloading zone. It is however possible also to use the more backward gripping devices 17, 31 for pushing the frame 6 to be worked in the working zone 12 and/or to use the more advanced gripping devices 32, 33 for dragging the already worked frame 6 away from the working zone 12.

The apparatus 1 allows the required mechanical work operations to be performed on the already assembled frame 6, which enables avoiding the work operation positioning errors which occurred in the prior art when already worked section bars were assembled. Furthermore, the apparatus 1 allows work operations to be performed on all the faces of the section bar which is worked. Therefore, there is no need to turn the frame in order to be able to work, for example, the lower face of the first section bar 2.

The gripping means and transverse blocking device enable precise positioning of the frame to be worked on a working plane defined by the resting means. This ensures high precision of the work operations.

If finally two working heads are present, the apparatus 1 may simultaneously work two section bars of the frame, which allows productivity to be increased.

The apparatus 1 can work as a single unit, in which case for example the operators can manually load on the apparatus 1 the frames 6 to be worked and manually unload the already worked frames. Alternatively, the apparatus 1 can be integrated in an automatic production line, of the type disclosed in Figure 6.

Figure 6 shows a plant 40 for manufacturing door or window frames made of a polymer material, particularly PVC. The plant 40 comprises a welding station 41 in which a first section bar 102, a second section bar 103, a third section bar 104 and a fourth section bar 105 are welded to one another at respective end zones in order to obtain a frame 106 having a quadrangular shape. The welding station 41 comprises four welding heads 42, each of which is arranged for welding two adjacent section bars in a corner zone of the frame 106.

The plant 40 comprises advancement means, which are not shown, for indexing the frame 106 in an advancement direction F1.

A first working station 43 is positioned downstream of the welding station 41, the first working station 43 comprising an apparatus similar to the apparatus 1 disclosed with reference to Figures 1 to 5. The first working station 43 comprises a working unit 107 and a further working unit 109, arranged for performing mechanical milling and/or drilling operations respectively on the first section bar 102 and on the third section bar 104. Hence, the first working station 43 enables a pair of parallel section bars forming the frame 106 to be machined simultaneously.

The plant 40 further comprises, downstream of the first working station 43, a cleaning station 44 arranged for cleaning the welding beads which have been formed in the welding station 41 when the section bars forming the frame 106 have been welded to one another. The cleaning station 44 comprises a cleaning head 45 for cleaning the welding bead and a rotating device which is not shown. The rotating device rotates the frame 106 by predetermined angles such as to bring all the corner zones of the frame 106 consecutively to interact with the cleaning head 45. In particular, the cleaning head 45 cleans a first corner zone of the frame 106, after which the rotating device causes the frame 106 to perform three consecutive 90° rotations such that the other three corner zones of the frame 106 interact in succession with the cleaning head 45.

When the frame 106 arrives in the cleaning station 44, the first section bar 102 and the third section bar 104 are arranged parallel to the advancement direction F1, while the second section bar 103 and the fourth section bar 105 are arranged transversely, in particular perpendicularly, to the advancement direction F1. Since the rotating device located in the cleaning station 44 rotates the frame 106 by 90° three times, when the frame 106 exits from the cleaning station 44, the second section bar 103 and the fourth section bar 105 are parallel to the advancement direction F1, while the first section bar 102 and the third section bar 104 are perpendicular to the advancement direction F1.

A second working station 46 is arranged downstream of the cleaning station 44, the second working station 46 being suitable for performing mechanical operations of drilling and/or milling on the frame 106. The second working station 46 comprises an apparatus which is entirely similar to the apparatus 1 disclosed with reference to Figures 1 to 5. The second working station 46 comprises a working unit 207 and a further working unit 209 arranged for working two section bars of the frame 106 that are parallel to the advancement direction F1. Due to the rotations that the frame 106 has been subjected to in the cleaning station 44, the working unit 207 and the further working unit 209 interact respectively with the fourth section bar 105 and the second section bar 103. In this way it is possible to work all the section bars making up the frame 106.

The frame 106 thus obtained can now be unloaded from the plant 40 to be sent to a storage or dispatch zone.

The plant 40 enables the frames 106 to be obtained simply and automatically. In particular, the rotations of the frames 106 which are performed in the cleaning station 44 enable the frames 106 to be positioned such that all the section bars which make them up can be worked without using dedicated rotating devices.

## Claims

1. An apparatus for performing a mechanical work operation on a frame (6) for a door or window, the frame (6) being formed by a plurality of section bars (2, 3, 4, 5), the apparatus (1) comprising:
- conveyor means (13, 14, 32, 33) for conveying the frame (6) along an advancement direction (F; F1) towards a working zone (12);
- a working unit (7) arranged in the working zone (12), the working unit (7) being movable along a movement direction (M) parallel to the advancement direction (F; F1) for performing the work operation on a first section bar (2) of the frame (6);
- gripping means (17, 31) suitable for engaging with a second section bar (3) of the frame (6) in order to keep the frame (6) stationary during the work operation;
- a support device (27) for supporting a portion of the first section bar (2);
- a transverse blocking device (29, 30) for blocking said portion transversely to the movement direction (M) during the work operation, the support device (27) and the transverse blocking device (29, 30) being movable with the working unit (7) in order to engage with different portions of the first section bar (2),
**characterized in that** the support device (27) is integrated with the working unit (7).

2. An apparatus according to claim 1, wherein the support device (27) comprises a pair of resting rollers (28) supported by the working unit (7) for restingly receiving the first section bar (2), the resting rollers (28) being freely rotatable about respective axes, said axes being preferably horizontal.

3. An apparatus according to any preceding claim, wherein the transverse blocking device (29, 30) comprises an abutment element (29) against which a lateral face of the first section bar (2) can abut, and pushing means (30) for pushing the first section bar (2) against the abutment element (29), the pushing means (30) being preferably mounted on the working unit (7).

4. An apparatus according to claim 3, wherein the pushing means (30) comprise a presser device acting on a pair of rolling members (35), such as to push the rolling members (35) against a further lateral face of the first section bar (2), said further lateral face being opposite said lateral face.

5. An apparatus according to any preceding claim, wherein the gripping means comprise a pair of gripping devices (17, 31), the gripping devices (17, 31) of said pair being intended to interact with opposite ends of the second section bar (3) near two corner zones of the frame (6).

6. An apparatus according to claim 5, and further comprising a further pair of gripping devices (32, 33) arranged symmetrically to said pair of gripping devices (17, 31), said pair and said further pair being functionally interchangeable to keep stationary a front or alternatively a rear section bar of the frame (6) during the work operation.

7. An apparatus according to claim 5 or 6, wherein each gripping device (17, 31, 32, 33) comprises a first jaw element (18) and a second jaw element (19) which cooperate with one another to grip a section bar (3, 5) arranged transversely to the movement direction (M).

8. An apparatus according to claim 7, wherein the first jaw element (18) has a first operating surface (20) arranged transversely of the movement direction (M) and a second operating surface (21) arranged parallelly to the movement direction (M), such that the first jaw element (18) is usable as an abutment element (29) of the transverse blocking device or alternatively as a gripping element of the gripping means (17, 31).

9. An apparatus according to any preceding claim, and further comprising an upper blocking device (36) suitable for abutting on an upper face of the first section bar (2), the upper blocking device (36) being located opposite the support device (27).

10. An apparatus according to claim 9, wherein the upper blocking device (36) is movable with the working unit (7) along the movement direction (M), the upper blocking device (36) being preferably supported by the working unit (7).

11. An apparatus according to claim 9 or 10, wherein the upper blocking device (36) comprises a pair of upper rollers (37) which are freely rotatable about respective preferably horizontal axes, and a presser organ for pushing the upper rollers (37) against the upper surface of the first section bar (2).

12. An apparatus according to any preceding claim, and further comprising a further working unit (9) which is movable along a third section bar (4) of the frame (6), the third section bar (4) being opposite the first section bar (2).

13. A plant for manufacturing frames for doors or windows, comprising:
- a welding station (41) suitable for welding section bars (102, 103, 104, 105) made of a polymer material for obtaining a frame (106);
- a working station (43) comprising an apparatus according to any one of claims 1 to 12, the working station (43) being positioned downstream of the welding station (41) with respect to the advancement direction (F1) such as to work on at least one section bar (102, 104) of the frame (106) that extends along the advancement direction (F1).

14. A plant according to claim 13, and further comprising:
- a cleaning station (44) arranged downstream of the working station (43) for cleaning welded zones of the frame (106), the cleaning station (44) being provided with a rotating device for rotating the frame (106) about a vertical axis;
- a further working station (46) comprising an apparatus according to any one of claims 1 to 13, the further working station (46) being positioned downstream of the cleaning station (44) such as to work on at least one further section bar (103, 104) which has been positioned along the advancement direction (F1) by the rotating device.

## Patentansprüche

1. Anlage zur maschinellen Bearbeitung eines Rahmens (6) für eine Tür oder ein Fenster, wobei der Rahmen (6) aus mehreren Formstäben (2, 3, 4, 5) besteht und die Anlage (1) umfasst:
- Fördermittel (13, 14, 32, 33) zum Fördern des Rahmens (6) entlang einer Vorschubrichtung (F; F1) zu einem Bearbeitungsbereich (12);
- eine Bearbeitungseinheit (7), angeordnet im Bearbeitungsbereich (12), wobei die Bearbeitungseinheit (7) entlang einer Bewegungsrichtung (M) bewegbar ist, die parallel zur Vorschubrichtung (F; F1) verläuft, um einen ersten Formstab (2) des Rahmens (6) zu bearbeiten;
- Greifmittel (17, 31), geeignet, um mit einem zweiten Formstab (3) des Rahmens (6) in Eingriff zu gelangen, um den Rahmen (6) während der Bearbeitung stationär beizubehalten;
- eine Stützvorrichtung (27) zum Stützen eines Abschnitts des ersten Formstabs (2);
- eine transversale Spannvorrichtung (29, 30) zum Einspannung dieses Abschnitts transversal zur Bewegungsrichtung (M) während der Bearbeitung, wobei die Stützvorrichtung (27) und die transversale Spannvorrichtung (29, 30) mit der Bearbeitungseinheit (7) bewegbar sind, um mit verschiedenen Abschnitten des ersten Formstabs (2) in Eingriff zu gelangen,
**dadurch gekennzeichnet, dass** die Stützvorrichtung (27) mit der Bearbeitungseinheit (7) integriert ist.

2. Anlage nach Anspruch 1, wobei die Stützvorrichtung (27) ein Paar Ablagerollen (28) umfasst, gestützt von der Bearbeitungseinheit (7), um den ersten Formstab (2) anliegend aufzunehmen, und die Ablagerollen (28) frei um jeweilige Achsen drehbar sind, wobei diese Achse vorzugsweise horizontal sind.

3. Anlage nach einem der vorhergehenden Ansprüche, wobei die transversale Spannvorrichtung (29, 30) ein Anschlagelement (29) umfasst, an das eine seitliche Fläche des ersten Formstabs (2) anschlagen kann, sowie Schiebemittel (30) zum Schieben des ersten Formstabs (2) gegen das Anschlagelement (29), wobei die Schiebemittel (30) vorzugsweise auf der Bearbeitungseinheit (7) montiert sind.

4. Anlage nach Anspruch 3, wobei die Schiebemittel (30) eine Pressvorrichtung umfasst, die auf ein Paar Rollelemente (35) wirkt, sodass die Rollelemente (35) gegen eine weitere seitliche Fläche des ersten Formstabs (2) geschoben werden, und die weitere seitliche Fläche gegenständig zur genannten seitlichen Fläche angeordnet ist.

5. Anlage nach einem der vorhergehenden Ansprüche, wobei die Greifmittel ein Paar Greifvorrichtungen (17, 31) umfassen und die Greifvorrichtungen (17, 31) dieses Paars ausgelegt sind, um mit entgegengesetzten Enden des zweiten Formstabs (3) in der Nähe zweier Eckbereiche des Rahmens (6) zusammenzuwirken.

6. Anlage nach Anspruch 5, zudem umfassend ein weiteres Paar Greifvorrichtungen (32, 33), die symmetrisch zum genannten Paar Greifvorrichtungen (17, 31) angeordnet sind, wobei das Paar und das weitere Paar funktionell austauschbar sind, um einen frontseitigen oder alternativ einen rückseitigen Formstab des Rahmens (6) während der Bearbeitung stationär beizubehalten.

7. Anlage nach Anspruch 5 oder 6, wobei jede Greifvorrichtung (17, 31, 32, 33) ein erstes Spannbackenelement (18) und ein zweites Spannbackenelement (19) umfasst, die zusammenarbeiten, um einen Formstab (3, 5) zu greifen, der transversal zur Bewegungsrichtung (M) angeordnet ist.

8. Anlage nach Anspruch 7, wobei das erste Spannbackenelement (18) eine erste Arbeitsoberfläche (20) aufweist, die transversal zur Bewegungsrichtung (M) angeordnet ist, und eine zweite Arbeitsoberfläche (21), die parallel zur Bewegungsrichtung (M) angeordnet ist, sodass das erste Spannbackenelement (18) als Anschlagelement (29) der transversalen Spannvorrichtung oder alternativ als Greifelement der Greifmittel (17, 31) eingesetzt werden kann.

9. Anlage nach einem der vorhergehenden Ansprüche, zudem umfassend eine obere Spannvorrichtung (36), geeignet zum Anschlagen an einer oberen Fläche des ersten Formstabs (2), wobei die obere Spannvorrichtung (36) gegenständig zur Stützvorrichtung (27) platziert ist.

10. Anlage nach Anspruch 9, wobei die obere Spannvorrichtung (36) mit der Bearbeitungseinheit (7) entlang der Bewegungsrichtung (M) bewegbar ist und die obere Spannvorrichtung (36) vorzugsweise von der Bearbeitungseinheit (7) gestützt wird.

11. Anlage nach Anspruch 9 oder 10, wobei die obere Spannvorrichtung (36) ein Paar obere Rollen (37) umfasst, die frei um jeweilige vorzugsweise horizontale Achsen drehbar sind, und ein Presselement zum Schieben der oberen Rollen (37) gegen die obere Oberfläche des ersten Formstabs (2).

12. Anlage nach einem der vorhergehenden Ansprüche, zudem umfassend eine weitere Bearbeitungseinheit (9), die entlang eines dritten Formstabs (4) des Rahmens (6) bewegbar ist, wobei der dritte Formstab (4) gegenständig zum ersten Formstab (2) angeordnet ist.

13. System zur Herstellung von Rahmen für Türen oder Fenster, umfassend:
- eine Schweißstation (41), geeignet zum Schweißen von Formstäben (102, 103, 104, 105), bestehend aus einem Polymermaterial, um einen Rahmen (106) zu erhalten;
- eine Bearbeitungsstation (43), umfassend eine Anlage nach einem der Ansprüche 1 bis 12, wobei die Bearbeitungsstation (43) in Bezug auf die Vorschubrichtung (F1) nach der Schweißstation (41) angeordnet ist, sodass sie auf mindestens einem Formstab (102, 104) des Rahmens (106) arbeitet, der sich entlang der Vorschubrichtung (F1) erstreckt.

14. System nach Anspruch 13, zudem umfassend:
- eine Reinigungsstation (44), angeordnet nach der Bearbeitungsstation (43), zum Reinigen der Schweißbereiche des Rahmens (106), wobei die Reinigungsstation (44) mit einer Drehvorrichtung versehen ist, um den Rahmen (106) um eine vertikale Achse zu drehen;
- eine weitere Bearbeitungsstation (46), umfassend eine Anlage nach einem der Ansprüche 1 bis 13, wobei die weitere Bearbeitungsstation (46) nach der Reinigungsstation (44) angeordnet ist, sodass sie auf mindestens einem weiteren Formstab (103, 104) arbeitet, der von der Drehvorrichtung entlang der Vorschubrichtung (F1) platziert wurde.

## Revendications

1. Installation pour effectuer un usinage mécanique sur un cadre (6) pour une porte ou pour une fenêtre, le cadre (6) se composant d'une pluralité de profilés (2, 3, 4, 5), l'installation (1) comprenant:
- des moyens de convoyage (13, 14, 32, 33) pour acheminer le cadre (6) dans un sens de progression (F ; F1) vers une zone d'usinage (12) ;
- une unité d'usinage (7) disposée dans la zone d'usinage (12), l'unité d'usinage (7) se déplaçant dans un sens de déplacement (M) parallèle au sens de progression (F ; F1) pour effectuer l'usinage sur un premier profilé (2) du cadre (6) ;
- des moyens de préhension (17, 31) pouvant se mettre en prise avec un second profilé (3) du cadre (6) pour garder le cadre (6) immobile pendant l'usinage ;
- un dispositif de support (27) pour soutenir une partie du premier profilé (2) ;
- un dispositif de blocage transversal (29, 30) pour bloquer ladite partie transversalement au sens de déplacement (M) pendant l'usinage, le dispositif de support (27) et le dispositif de blocage transversal (29, 30) pouvant se déplacer avec l'unité d'usinage (7) pour se mettre en prise avec différentes parties du premier profilé (2),
**caractérisé en ce que** le dispositif de support (27) est intégré à l'unité d'usinage (7).

2. Installation selon la revendication 1, dans lequel le dispositif de support (27) comprend une paire de rouleaux d'appui (28) soutenus par l'unité d'usinage (7) pour recevoir en appui le premier profilé (2), les rouleaux d'appui (28) pouvant tourner librement autour d'axes respectifs, lesdits axes étant de préférence horizontaux.

3. Installation selon l'une quelconque des revendications précédentes, dans lequel le dispositif de blocage transversal (29, 30) comprend un élément de butée (29) contre lequel une face latérale du premier profilé (2) peut buter, et des moyens de poussée (30) pour pousser le premier profilé (2) contre l'élément de butée (29), les moyens de poussée (30) étant montés de préférence sur l'unité d'usinage (7).

4. Installation selon la revendication 3, dans lequel les moyens de poussée (30) comprennent un dispositif de pressage agissant sur une paire d'organes roulants (35), de sorte à pousser les organes roulants (35) contre une autre face latérale du premier profilé (2), ladite autre face latérale étant en face de ladite face latérale.

5. Installation selon l'une quelconque des revendications précédentes, dans lequel les moyens de préhension comprennent une paire de dispositifs de préhension (17, 31), les dispositifs de préhension (17, 31) de ladite paire étant conçus pour interagir avec des extrémités opposées du second profilé (3) près de deux zones d'angle du cadre (6).

6. Installation selon la revendication 5, et comprenant également une autre paire de dispositifs de préhension (32, 33) disposés symétriquement par rapport à ladite paire de dispositifs de préhension (17, 31), ladite paire et ladite autre paire étant interchangeables fonctionnellement pour garder immobile soit un profilé avant soit, alternativement, un profilé arrière du cadre (6) pendant l'usinage.

7. Installation selon les revendications 5 ou 6, dans lequel chaque dispositif de préhension (17, 31, 32, 33) comprend une première pince (18) et une seconde pince (19) qui coopèrent l'une avec l'autre pour saisir un profilé (3, 5) disposé transversalement au sens de déplacement (M).

8. Installation selon la revendication 7, dans lequel la première pince (18) présente une première surface de travail (20) disposée transversalement au sens de déplacement (M) et une seconde surface de travail (21) disposée parallèlement au sens de déplacement (M), de sorte que la première pince (18) peut faire office soit d'élément de butée (29) du dispositif de blocage transversal, soit, alternativement, d'élément de préhension des moyens de préhension (17, 31).

9. Installation selon l'une quelconque des revendications précédentes, et comprenant également un dispositif de blocage supérieur (36) pouvant buter contre une face supérieure du premier profilé (2), le dispositif de blocage supérieur (36) se situant en face du dispositif de support (27).

10. Installation selon la revendication 9, dans lequel le dispositif de blocage supérieur (36) peut se déplacer avec l'unité d'usinage (7) dans le sens de déplacement (M), le dispositif de blocage supérieur (36) étant soutenu de préférence par l'unité d'usinage (7).

11. Installation selon les revendications 9 ou 10, dans lequel le dispositif de blocage supérieur (36) comprend une paire de rouleaux supérieurs (37) qui peuvent tourner librement autour d'axes respectifs, de préférence horizontaux, et un organe de pressage pour pousser les rouleaux supérieurs (37) contre la surface supérieure du premier profilé (2).

12. Installation selon l'une quelconque des revendications précédentes, et comprenant également une autre unité d'usinage (9) qui peut se déplacer le long d'un troisième profilé (4) du cadre (6), le troisième profilé (4) se situant en face du premier profilé (2).

13. Système pour la fabrication de cadres pour portes ou pour fenêtres, comprenant :
- un poste de soudage (41) pouvant souder des profilés (102, 103, 104, 105) faits dans une matière polymère pour obtenir un cadre (106) ;
- un poste d'usinage (43) comportant une installation selon l'une quelconque des revendications 1 à 12, le poste d'usinage (43) étant positionné en aval du poste de soudage (41) par rapport au sens de progression (F1), de sorte à travailler sur au moins un profilé (102, 104) du cadre (106) qui se développe dans le sens de progression (F1).

14. Système selon la revendication 13, et comprenant également :
- un poste de nettoyage (44) disposé en aval du poste d'usinage (43) pour nettoyer des zones soudées du cadre (106), le poste de nettoyage (44) étant équipé d'un dispositif tournant pour faire tourner le cadre (106) autour d'un axe vertical ;
- un autre poste d'usinage (46) comportant une installation selon l'une quelconque des revendications 1 à 13, l'autre poste d'usinage (46) étant positionné en aval du poste de nettoyage (44), de sorte à travailler sur au moins un autre profilé (103, 104) qui a été positionné dans le sens de progression (F1) par le dispositif tournant.
